(19)

Europäisches Patentamt

European Patent Office

Office européen des brevets

(11) **EP 3 900 323 B1**

(12) **FASCICULE DE BREVET EUROPEEN**

(45) Date de publication et mention de la délivrance du brevet:
**16.11.2022 Bulletin 2022/46**

(21) Numéro de dépôt: **19817777.6**

(22) Date de dépôt: **17.12.2019**

(51) Classification Internationale des Brevets (IPC):
**H04N 5/347** *(2011.01)*    **H04N 5/378** *(2011.01)*

(52) Classification Coopérative des Brevets (CPC):
**H04N 5/378; H04N 5/347**

(86) Numéro de dépôt international:
**PCT/EP2019/085522**

(87) Numéro de publication internationale:
**WO 2020/127180 (25.06.2020 Gazette 2020/26)**

(54) **MATRICE DE PIXELS À REGROUPEMENT RAPIDE**

PIXELMATRIX MIT SCHNELLER PIXEL-BINNING

PIXEL MATRIX WITH FAST BINNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873899**

(43) Date de publication de la demande:
**27.10.2021 Bulletin 2021/43**

(73) Titulaire: **Trixell**
**38430 Moirans (FR)**

(72) Inventeurs:
- **BOSSET, Bruno**
  **38430 MOIRANS (FR)**
- **FAVRE, Xavier**
  **38430 MOIRANS (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2007 075 255     US-A1- 2007 229 686**
**US-B1- 6 330 303**

EP 3 900 323 B1

Processed by Luminess, 75001 PARIS (FR)

**Description**

L'invention concerne un détecteur matriciel. L'invention peut être mise en œuvre pour la prise d'image dans un détecteur. Ce type de dispositif comprend un grand nombre de points sensibles appelés pixels généralement organisés en matrice ou en barrette.

L'invention trouve une utilité dans la réalisation d'images visibles mais n'est pas limitée à ce domaine. On peut par exemple réaliser des cartographies de pression ou de température ou encore des représentations en deux dimensions de potentiels chimiques ou électriques. Ces cartographies ou représentations forment des images de grandeurs physiques.

Dans un détecteur, un pixel représente l'élément sensible élémentaire du détecteur. Chaque pixel convertit un phénomène physique auquel il est soumis en un signal électrique. Les signaux électriques issus des différents pixels sont collectés lors d'une phase de lecture de la matrice puis numérisés de manière à pouvoir être traités et stockés pour former une image. Les pixels sont formés d'une zone sensible au phénomène physique et délivrent par exemple un courant de charges électriques. Le phénomène physique peut être un rayonnement électromagnétique véhiculant un flux de photons et par la suite, l'invention sera expliquée au moyen de ce type de rayonnement et le courant de charge est fonction du flux de photons reçu par la zone sensible. La généralisation à tout détecteur matriciel sera aisée.

Dans un détecteur d'image, chaque pixel comprend généralement un élément photosensible, ou photodétecteur, qui peut par exemple être une photodiode, une photorésistance ou un phototransistor. On trouve des matrices photosensibles de grandes dimensions qui peuvent posséder plusieurs millions de pixels organisés en lignes et en colonnes. Chaque pixel comprend en outre un circuit électronique constitué par exemple d'interrupteurs, capacités, résistances, en aval duquel est placé un actionneur. L'ensemble constitué par l'élément photosensible et le circuit électronique permet de générer des charges électriques et de les collecter. Le circuit électronique permet généralement la réinitialisation de la charge collectée dans chaque pixel après un transfert de charge. Le rôle de l'actionneur est de transférer ou de recopier les charges collectées par le circuit dans un conducteur de colonne. Ce transfert est réalisé lorsque l'actionneur en reçoit l'instruction d'un conducteur de ligne. La sortie de l'actionneur correspond à la sortie du pixel. Les appellations « conducteur de ligne » et « conducteur de colonne » sont purement arbitraires. Il est bien entendu possible d'inverser ces appellations.

Dans ce type de détecteur, un pixel fonctionne selon deux phases : une phase de prise d'image, durant laquelle le circuit électronique du pixel accumule les charges électriques générées par l'élément photosensible, et une phase de lecture, au cours de laquelle les charges collectées sont transférées ou recopiées dans le conducteur de colonne, grâce à l'actionneur.

Un détecteur d'images matriciel comprend des conducteurs de ligne, chacun reliant les pixels d'une même ligne, et des conducteurs de colonnes, chacun reliant les pixels d'une même colonne. Les conducteurs de colonnes sont connectés à des circuits de conversion généralement disposés sur un bord de la matrice que l'on peut appeler « pied de colonne ». Un détecteur en barrette peut être considéré comme un détecteur matriciel ne comprenant qu'une seule ligne de pixels et donc autant de colonnes que de pixels.

Lors de la phase de lecture, une instruction de lecture est émise vers tous les actionneurs d'une même ligne de la matrice et chacun des pixels de cette ligne est lu en transférant son information électrique, charge, tension, courant, fréquence... au conducteur de colonne auquel il est associé.

Par la suite, on décrira le cas où l'information électrique est disponible de façon analogique dans les pixels, sous forme de quantités de charges stockées sur des condensateurs de même valeur. Il est bien entendu que l'invention peut être mise en œuvre pour toute forme d'information électrique générée dans chacun des pixels comme par exemple une information numérique.

Il peut être souhaitable de regrouper plusieurs pixels pour les lire collectivement. Ce regroupement, connu dans la littérature anglo-saxonne sous le nom de « binning », permet d'améliorer le rapport signal sur bruit de chaque élément lu. Un autre intérêt du regroupement de pixels est d'améliorer la sensibilité du détecteur. Le regroupement de pixels lors de leur lecture permet également d'améliorer la vitesse de lecture du détecteur et donc d'augmenter la fréquence des images produites par le détecteur. Le regroupement se fait cependant au détriment de la résolution spatiale.

Dans le cas où l'information issue de chaque pixel est une charge électrique, le regroupement de pixels est réalisable par une redistribution de des charges des pixels à regrouper sur une capacité commune par exemple disposée dans le circuit de conversion en pied de colonne.

Par ailleurs, il est possible de réduire le nombre de circuits de conversion en pied de colonne, en raccordant plusieurs colonnes à un même circuit de conversion. Pour raccorder plusieurs conducteurs de colonne à un même circuit de conversion, on peut mettre en œuvre des multiplexeurs. Plusieurs conducteurs de colonnes voisins sont chacun reliés aux différentes entrées d'un même multiplexeur. La sortie du multiplexeur est reliée à un circuit de conversion qui est donc commun à plusieurs colonnes voisines de pixels. Les différentes colonnes de pixels raccordées à un même multiplexeur sont lues successivement par le circuit de conversion. La mise en œuvre de multiplexeurs permet de diviser le nombre de circuits de conversion d'un facteur K égal au nombre d'entrées des multiplexeurs mais ralentit la vitesse de lecture du même facteur K puisque les lectures sont réalisées en série.

Le regroupement d'informations de pixels voisins d'une même ligne et appartenant à des colonnes distinctes se fait en sortie des circuits de conversion. Lorsque des circuits de conversion sont communs à plusieurs colonnes de pixels, le regroupement d'informations est délicat à réaliser car les informations des pixels à grouper issus d'une même ligne n'arrivent pas en même temps. Il devient très compliqué de les redistribuer sur une capacité commune en pied de colonne sans perdre du temps ou de la surface.

L'invention se place dans le cadre de l'utilisation de multiplexeurs permettant de réduire le nombre de circuits de conversion. L'invention vise à augmenter la vitesse de lecture d'une matrice de pixels dans laquelle des informations issues de pixel immédiatement voisins et appartenant à des colonnes distinctes sont regroupées. La demande américaine US 2007/075255 divulgue une matrice de pixels colorés arrangés selon le motif de ligne G1-G2-R-B. Chaque couleur est en entrée d'un multiplexeur parmi quatre, un par couleur, et chaque multiplexeur regroupe les pixels d'une même couleur.

A cet effet, l'invention a pour objet un détecteur matriciel comprenant :

- un ensemble de pixels sensibles à un phénomène physique et organisé en matrice selon au moins une ligne et plusieurs colonnes, chaque pixel générant un signal fonction du phénomène physique,
- Q conducteurs de colonne reliant chacun le ou les pixels d'une même colonne et destinés à transporter les signaux générés par les pixels les colonnes et les conducteurs associés étant ordonnés selon leur répartition physique, q représentant une colonne courante.
- N multiplexeurs , chaque multiplexeur comprenant K entrées ordonnées de 1 à K, k représentant le rang de l'entrée courante, chaque entrée recevant des signaux d'un des conducteurs de colonne, K étant supérieur ou égal à 2, Q étant au moins égal à $K^2$, les multiplexeurs étant ordonnés de 1 à Q/K, n représentant le rang du multiplexeur courant, chaque multiplexeur comprenant une sortie, les N multiplexeurs délivrant sur leur sortie, séquentiellement les signaux reçus dans l'ordre de leurs entrées, les N multiplexeurs étant configurés pour délivrer simultanément les signaux reçus d'entrées de même rang k,
- un réseau d'interrupteurs permettant de mélanger des signaux présents sur les sorties des multiplexeurs, afin de regrouper les signaux issus de pixel immédiatement voisins appartenant à des colonnes distinctes, dans lequel :
- la colonne de rang q avec q compris entre 1 et $K^2$ est raccordée au multiplexeur de rang n = q modulo K,
- la colonne de rang q avec q compris entre 1 et $K^2$ est raccordée à l'entrée de rang k = $_\lfloor (q - 1)/K_\rfloor$ + 1.

Avantageusement, Q est supérieur à $K^2$ et le raccordement des $K^2$ premiers conducteurs de colonnes avec K multiplexeurs et avec le réseau d'interrupteurs correspondant est répliqué par sous-ensembles de $K^2$ conducteurs de colonnes et de K multiplexeurs.

Le réseau d'interrupteurs est avantageusement configuré pour opérer des regroupements par sous multiples de K ou par K.

Avantageusement, le détecteur comprend en outre N circuits de conversion, chacun associé à un des multiplexeurs, chaque multiplexeur délivrant un signal multiplexé vers le circuit de conversion associé.

Le réseau d'interrupteurs est avantageusement disposé en aval des circuits de conversion.

L'invention sera mieux comprise et d'autres avantages apparaîtront à la lecture de la description détaillée d'un mode de réalisation donné à titre d'exemple, description illustrée par le dessin joint dans lequel :

- la figure 1 représente un exemple de matrices de pixels dans lesquelles l'invention peut être mise en œuvre ;
- la figure 2 représente un autre exemple de matrices de pixels dans lesquelles l'invention peut être mise en œuvre ;
- la figure 3 représente un exemple de circuit de lecture associé aux matrices de la figure 1 ;
- la figure 4 représente un exemple de circuit de conversion pouvant être mis en œuvre dans le circuit de lecture de la figure 3 ;
- la figure 5 représente un exemple de réseau d'interrupteurs pouvant être mis en œuvre dans le circuit de lecture de la figure 3.

Par souci de clarté, les mêmes éléments porteront les mêmes repères dans les différentes figures.

La description qui suit est faite en rapport avec un détecteur matriciel formé de plusieurs circuits électroniques élémentaires appelés pixels comprenant chacun un élément sensible à une grandeur physique. Les circuits électroniques élémentaires sont, dans l'exemple décrit, des pixels sensibles à un rayonnement lumineux. Il est bien entendu que l'invention peut être mise en œuvre pour d'autres détecteurs sensibles à toute forme de grandeur physique permettant par exemple de réaliser une cartographie de pression ou de température.

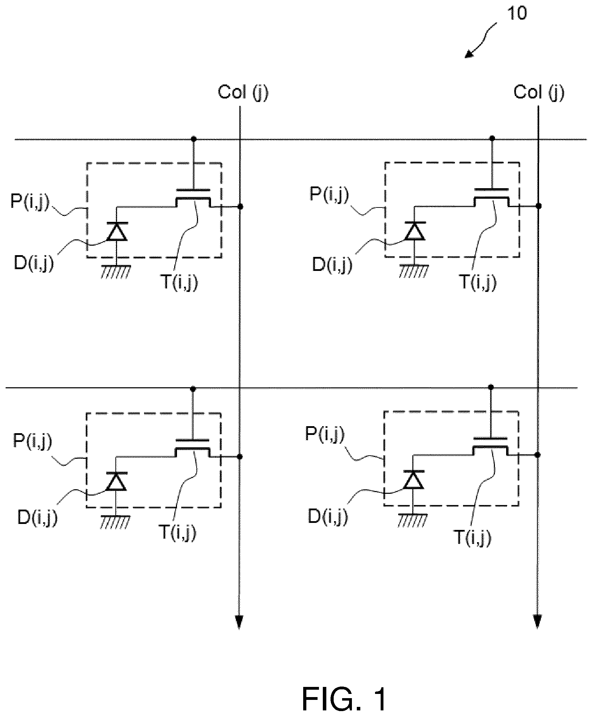

La figure 1 représente schématiquement une matrice de deux lignes et deux colonnes pour simplifier la compréhension. Quatre pixels P sont formés, chacun à l'intersection d'une ligne et d'une colonne. Il est bien entendu que les matrices réelles sont généralement beaucoup plus grandes et possèdent un grand nombre de lignes et de colonnes. La matrice appartient à un détecteur matriciel 10 permettant de réaliser des images numérisées.

Chaque pixel P comprend une zone photosensible, représentée ici par une photodiode D, et un circuit électronique de traitement formé, dans l'exemple de la figure 1, par un seul transistor T. Les références des composants D et T sont suivis de de deux coordonnées (i,j) pouvant prendre le rang de la ligne pour i et le rang de la colonne pour j. Ce pixel est aussi appelé pixel de type 1T car possédant un transistor dont la fonction va être décrite plus loin.

De façon générale, il est connu de réaliser des matrices de pixels comprenant des transistors mettant en œuvre des semi-conducteurs complémentaires en silicium cristallin connus dans la littérature anglo-saxonne par leur abréviation CMOS pour : « Complementary Metal Oxide Semiconductor ». L'invention ne se limite pas à ce type de transistors, on peut par exemple la mettre en œuvre pour des matrices comprenant des transistors à effet de champ à couches minces connus dans la littérature anglo-saxonne sous le nom de TFT pour : « Thin-film transistor ». Les transistors de type TFT peuvent être à base d'oxydes métalliques comme par exemple les transistors à base d'oxyde amorphe ou cristallin d'indium, de gallium et de zinc connus sous leur abréviation anglo-saxonne : IGZO. D'autres familles de transistors de type TFT peuvent être mises en œuvre comme par exemple les TFT organiques, les TFT en silicium amorphe, les TFT en silicium polycristallin....

Les pixels P d'une même colonne sont raccordés à un conducteur de colonne Col. Ce conducteur permet le recueil d'informations provenant des pixels qui lui sont reliés. Les pixels P d'une même ligne sont raccordés à un conducteur de ligne véhiculant un signal Phi_ligne permettant de commander chacune des lignes de pixels.

Lors d'une phase de prise d'image, intervenant après une opération de remise à zéro, l'éclairement reçu par la photodiode D fait décroître le potentiel de sa cathode. Cette phase de prise d'image est suivie d'une phase de lecture pendant laquelle, on lit le potentiel de la photodiode D. Pour ce faire, on rend passant le transistor T, qui a donc un rôle d'interrupteur, grâce à la commande Phi_ligne appliquée à sa grille.

Le conducteur de colonne Col est utilisé pour le recueil d'information provenant d'un pixel de la colonne correspondante lorsque celui-ci est sélectionné au moyen du signal Phi_ligne. L'invention s'intéresse à la mise en forme d'informations issues des différents conducteurs de colonne Col.

Il est également possible de mettre en œuvre l'invention dans un détecteur dont les pixels sont plus simples, notamment en remplaçant le transistor T par une simple diode mise en conduction au moyen du signal Phi_ligne.

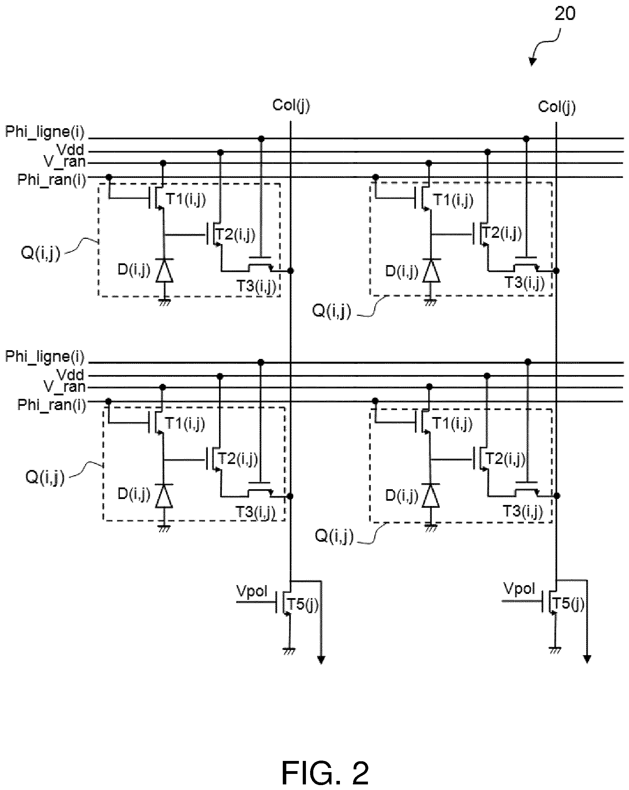

La figure 2 représente schématiquement un autre exemple de matrice de pixels référencés Q et pouvant également être mis dans un détecteur d'image conforme à l'invention. Dans chaque pixel Q, on retrouve la photodiode D, et un circuit électronique de traitement formé ici de trois transistors T1, T2 et T3. Comme précédemment, les repères de la photodiode D et des trois transistors sont suivi de deux coordonnées (i,j) pouvant prendre le rang de la ligne pour i et le rang de la colonne pour j. Dans la pratique ce type de pixel peut comprendre d'autres composants, notamment d'autres transistors. C'est pourquoi ce pixel est aussi appelé pixel de type 3T, car possédant au moins trois transistors.

Les pixels P d'une même colonne partagent un transistor T5 situés en extrémité du conducteur de colonne Col. Les pixels P d'une même ligne sont raccordés à quatre conducteurs de ligne véhiculant des signaux : Phi_ligne, Vdd, V_ran et Phi_ran permettant de commander chacune des lignes de pixels.

Le transistor T1 permet de réinitialiser la tension de la cathode de la photodiode D, à la tension V_ran, lors d'une opération de remise à zéro pendant laquelle le signal de commande Phi_ran est actif.

Lors d'une phase de prise d'image, intervenant après une opération de remise à zéro, l'éclairement reçu par la photodiode D fait décroître le potentiel de sa cathode. Cette phase de prise d'image est suivie d'une phase de lecture pendant laquelle, on lit le potentiel de la photodiode D. Pour ce faire, on rend passant le transistor T3, qui a donc un rôle d'interrupteur, grâce à la commande Phi_ligne appliquée à sa grille. Le transistor T3 du pixel de type 3T remplit le même rôle fonctionnel que le transistor T d'un pixel de type 1T décrit à l'aide de la figure 1.

Le transistor T2 fonctionne en suiveur, et le transistor T5 fonctionne en source de courant. Les transistors T2 et T5 forment alors un étage suiveur de tension qui recopie la tension présente sur la cathode de la photodiode D, et la reproduit, à un décalage près, sur conducteur de colonne Col. Pour réaliser sa recopie, le transistor T2 nécessite un courant de polarisation circulant dans son drain et sa source. Ce courant est imposé par un générateur de courant formé par un transistor T5 commun ou non à plusieurs pixels. Dans l'exemple représenté, le transistor T5 est commun à une colonne de pixels. Il est aussi possible de n'utiliser qu'un seul transistor T5 source de courant, pour toute la matrice, à condition de le commuter successivement sur les différentes colonnes, au fur et à mesure de la lecture de ces mêmes colonnes. Le conducteur de colonne Col est utilisé à la fois pour la polarisation du transistor T2 et pour le recueil d'information provenant d'un pixel de la colonne correspondante lorsque celui-ci est sélectionné au moyen du signal Phi_ligne. Alternativement, il est possible de dédoubler le conducteur de colonne Col afin de séparer ses deux fonctions.

L'invention peut être mise en œuvre pour des pixels dont le fonctionnement est différent. A titre d'exemple l'invention peut être mise en œuvre pour des pixels de type 4T. En complément des transistors T1, T2 et T3, Les pixels 4T comprennent un transistor supplémentaire disposé entre la cathode de la photodiode D et la grille du transistor T2 formant le nœud du pixel. Ce transistor supplémentaire permet de transférer les charges accumulées dans la photodiode D vers le nœud du pixel à un instant choisi.

Des circuits d'adressage, généralement des registres à décalage, générant les signaux de commande Phi_ligne et Phi_ran, lorsqu'il est mis en œuvre, ne sont pas représentés sur les figures 1 et 2. Les circuits d'adressage sont disposés en extrémité de ligne.

L'appellation ligne et colonne est purement arbitraire et pourrait être inversée. Fonctionnellement, les détecteurs 10 et 20 comprennent des conducteurs appelés conducteurs de ligne véhiculant des signaux de commande des différents pixels et des conducteurs appelés conducteurs de colonne permettant le recueil d'informations collectées par les différents pixels.

Par la suite, on s'intéresse à l'utilisation des informations véhiculées par les conducteurs de colonne. L'invention peut également être mise en œuvre dans un détecteur réalisé sous forme de barrette, c'est-à-dire ne comprenant qu'une seule ligne de pixels, les colonnes ne comprenant alors qu'un seul pixel.

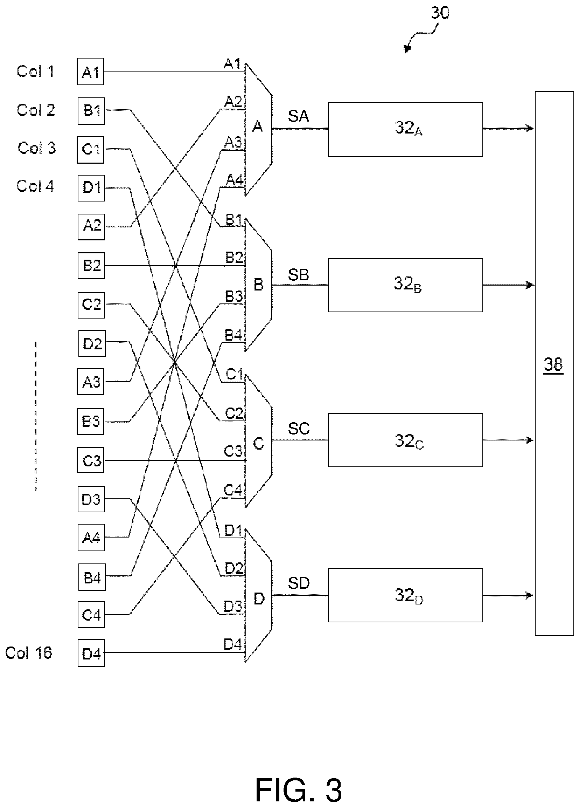

La figure 3 représente un circuit de lecture 30 disposé en pied de colonne du détecteur 10 ou du détecteur 20. Le circuit de lecture 30 est raccordé à tous les conducteurs de colonne Col. Dans l'exemple représenté, seize conducteurs de colonnes ordonnées de Col1 à Col16 sont représentés. Il est bien entendu que l'invention n'est pas limitée à un détecteur possédant seize colonnes de pixels et donc seize conducteurs de colonne. L'ordre spatial des conducteurs correspond à celui des pixels dans la matrice. Le pixel P(i, j) a pour voisins immédiats, le pixel P(i,j-1) et le pixel P(i,j+1). Donc le conducteur de colonne Col(j) à pour voisins immédiats le conducteur de colonne Col(j-1) d'une part et le conducteur de colonne Col(j+1) d'autre part. Les conducteurs de colonnes sont ordonnés selon leur répartition physique. On note q le rang de la colonne courante. q est un entier naturel croissant dans l'ordre physique des conducteurs de colonne.

Dans l'exemple représenté, le circuit de lecture 30 comprend quatre multiplexeurs A, B, C et D à quatre entrées chacun. Chacune des entrées des différents multiplexeurs A, B, C et D est raccordée à un des conducteurs de colonne Col. Chaque multiplexeur reçoit sur chacune de ses entrées un signal d'un des conducteurs de colonne Col. De façon plus générale chaque multiplexeur possède K entrées. Chaque multiplexeur reçoit les signaux de K conducteurs de colonne Col, un signal par entrée, K étant supérieur ou égal à 2. Pour un multiplexeur donné, on note k le rang de l'entrée courante, k étant un entier naturel compris entre 1 et K. Si le détecteur comprend Q conducteurs de colonne, Q est alors égal à $K^2$ dans l'exemple de la figure 3. On verra plus loin comment mettre en œuvre des matrices à plus grand nombre de colonnes.

Dans l'exemple représenté, les entrées de chacun des multiplexeurs sont ordonnées de k = 1 à k = 4 soit de A1 à A4 pour le multiplexeur A et de même pour les autres multiplexeurs B, C et D. Les quatre premières colonnes Col1 à Col4 sont respectivement raccordées aux quatre premières entrées de chacun des quatre multiplexeurs. Autrement dit, le conducteur de colonne Col1 est raccordé à l'entrée A1, le conducteur de colonne Col2 est raccordé à l'entrée B1, le conducteur de colonne Col3 est raccordé à l'entrée C1 et le conducteur de colonne Col4 est raccordé à l'entrée D1. Ensuite les quatre conducteurs de colonne suivants Col5 à Col8 sont respectivement raccordés aux quatre deuxièmes entrées de chacun des quatre multiplexeurs. Autrement dit le conducteur de colonne Col5 est raccordé à l'entrée A2, le conducteur de colonne Col6 est raccordé à l'entrée B2, le conducteur de colonne Col7 est raccordé à l'entrée C2 et le conducteur de colonne Col8 est raccordé à l'entrée D2. Le raccordement des conducteurs colonne s'enchaine de la même façon jusqu'à raccorder le conducteur Col16 à l'entrée D4.

Pour l'exemple de la figure 3, le raccordement des conducteurs de colonne Col et des multiplexeurs peut être résumé dans le tableau suivant :

| Conducteur de colonne | | Multiplexeur | | Entrée du Multiplexeur | |
|---|---|---|---|---|---|
| Nom | Rang q | Nom | Rang n | Nom | Rang k |
| Col1 | 1 | A | 1 | A1 | 1 |
| Col2 | 2 | B | 2 | B1 | 1 |
| Col3 | 3 | C | 3 | C1 | 1 |
| Col4 | 4 | D | 4 | D1 | 1 |
| Col5 | 5 | A | 1 | A2 | 2 |
| Col6 | 6 | B | 2 | B2 | 2 |
| Col7 | 7 | C | 3 | C2 | 2 |
| Col8 | 8 | D | 4 | D2 | 2 |
| Col9 | 9 | A | 1 | A3 | 3 |

(suite)

| Conducteur de colonne | | Multiplexeur | | Entrée du Multiplexeur | |
|---|---|---|---|---|---|
| Nom | Rang q | Nom | Rang n | Nom | Rang k |
| Col10 | 10 | B | 2 | B3 | 3 |
| Col11 | 11 | C | 3 | C3 | 3 |
| Col12 | 12 | D | 4 | D3 | 3 |
| Col13 | 13 | A | 1 | A4 | 4 |
| Col14 | 14 | B | 2 | B4 | 4 |
| Col15 | 15 | C | 3 | C4 | 4 |
| Col16 | 16 | D | 4 | D4 | 4 |

De façon plus générale, avec N multiplexeurs possédant chacun K entrées, on ordonne les multiplexeurs de 1 à Q/K, n représentant le rang du multiplexeur courant. En notant q le rang du conducteur colonne, la colonne de rang q, avec q compris entre 1 et $K^2$, est raccordée au multiplexeur de rang n = q modulo K. De plus, la colonne de rang q avec q compris entre 1 et $K^2$ est raccordée à l'entrée de rang k égal à la partie entière par défaut de (q - 1)/K à laquelle on ajoute 1. En notation mathématique complète :

$$k = \lfloor (q-1)/K \rfloor + 1$$

Avec ce mode de raccordement des conducteurs colonne aux multiplexeurs, deux conducteurs colonne voisins ne sont pas raccordés à un même multiplexeur. Ainsi il est possible de traiter simultanément les informations provenant de deux colonnes immédiatement voisines. Un regroupement réalisé en aval des multiplexeurs s'en trouve facilité du fait de la simultanéité dans le traitement des informations issues de pixels immédiatement voisins et appartenant à des colonnes distinctes. L'amont et l'aval sont définis dans le sens de transfert des signaux provenant des pixels.

Lors d'une phase de lecture d'une ligne du détecteur 10, les signaux de toutes les colonnes sont présentés quasi simultanément aux différentes entrées des multiplexeurs. Chaque multiplexeur A, B, C et D délivre sur sa sortie respectivement SA, SB, SC et SD séquentiellement les signaux qu'il reçoit de chacune de ses entrées et dans l'ordre de ses entrées. Par exemple, en se référant à la figure 3, le multiplexeur A délivre le signal de la colonne Col1 reçu sur son entrée A1, puis le signal de la colonne Col5 reçu sur son entrée A2, puis le signal de la colonne Col9 reçu sur son entrée A3 et enfin le signal de la colonne Col13 reçu sur son entrée A4. Il en est de même pour les autres multiplexeurs B, C et D. Les quatre multiplexeurs fonctionnant de façon simultanée et avantageusement synchronisée, on retrouve simultanément le signal de la colonne Col1 en sortie du multiplexeur A, le signal de la colonne Col2 en sortie du multiplexeur B, le signal de la colonne Col3 en sortie du multiplexeur C et le signal de la colonne Col4 en sortie du multiplexeur D. A l'instant d'après, on retrouve les signaux des colonnes Col5, Col6, Col7 et Col8 respectivement en sortie de chacun des multiplexeurs et ainsi de suite pour toutes les colonnes du détecteur 10. Autrement dit, le circuit de lecture 30 est configuré pour délivrer simultanément les signaux reçus d'entrées de même rang k.

Le détecteur 10 peut comprendre en aval de chaque multiplexeur un circuit de conversion. Autrement dit, chaque multiplexeur diffuse un signal multiplexé vers le circuit de conversion qui lui est associé. Il y a autant de circuits de conversion que de multiplexeurs. Dans les détecteurs 10 ou 20, il y a Q/K circuits de conversion. La présence des multiplexeurs permet de réduire le nombre de circuits de conversion d'un facteur Q/K. Dans l'exemple de la figure 3, les circuits de conversion sont référencés 32 avec en indice le repère du multiplexeur qui lui est associé.

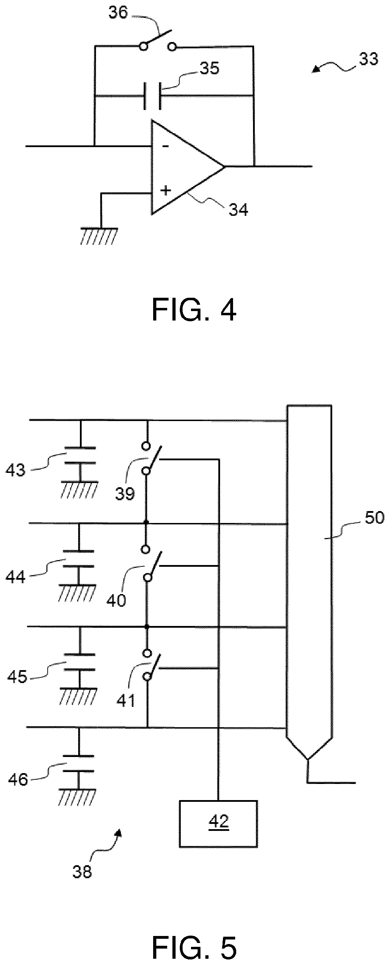

La figure 4 donne un exemple de circuit de conversion analogique formé d'un intégrateur 33. Chaque sortie des multiplexeurs A à D est relié à une entrée inverseuse d'un amplificateur 37 monté en intégrateur. Une capacité d'intégration 35 est montée entre l'entrée inverseuse et la sortie de l'amplificateur 37 formant la sortie du circuit de conversion. L'entrée non inverseuse de l'amplificateur 37 est reliée à un potentiel de référence qui, dans l'exemple représenté, est une masse électrique. Le circuit de conversion 33 comprend un interrupteur électronique 36 raccordé en parallèle de la capacité d'intégration 35. L'interrupteur électronique 36 permet la remise à zéro du circuit de conversion 33. Le circuit de conversion 33 permet de convertir en tension les charges véhiculées dans les conducteurs colonne associés. Alternativement ou en complément, le circuit de conversion peut numériser les signaux véhiculés dans les conducteurs colonne.

Le circuit de lecture 30 comprend en outre un réseau d'interrupteurs 38 permettant de regrouper des signaux issus de pixels immédiatement voisins. Un exemple de réseau d'interrupteurs 38 est donné sur la figure 5. Le réseau d'interrupteurs 38 est avantageusement disposé en aval des circuits de conversion quand ils sont présents. Dans l'exemple représenté sur la figure 3, où les multiplexeurs possèdent chacun quatre entrées, le réseau d'interrupteurs 38 est configuré pour regrouper les signaux de pixels voisins par deux ou par quatre. Plus précisément, pour regrouper des pixels voisins, le réseau d'interrupteurs 38 comprend trois interrupteurs électroniques 39, 40 et 41 et un module de pilotage 42 des trois interrupteurs 39, 40 et 41. L'interrupteur 39 permet de connecter entre elles les sorties des multiplexeurs A et B. Une capacité 43 peut être raccordée à la sortie du multiplexeur A et une capacité 44 peut être raccordée à la sortie du multiplexeur B. En fermant l'interrupteur 39 les capacités 43 et 44 sont alors connectées en parallèle, ce qui permet de moyenner les signaux présents sur les sorties des multiplexeurs A et B afin de les mélanger. De même l'interrupteur 41 permet de connecter les sorties des multiplexeurs C et D. Une capacité 45 peut être raccordée à la sortie du multiplexeur C et une capacité 46 peut être raccordée à la sortie du multiplexeur D. Ainsi, on retrouve en sortie du réseau d'interrupteurs 38, au premier instant, le regroupement des colonnes Col1 et Col2 d'une part et le regroupement des colonnes Col3 et Col4 d'une part. A l'instant suivant, on retrouve en sortie du réseau d'interrupteurs 38, le regroupement des colonnes Col5 et Col6 d'une part et le regroupement des colonnes Col7 et Col8 d'une part et ainsi de suite jusqu'au quatrième instant où les multiplexeurs délivrent les signaux présents sur leur quatrième entrée respective.

L'exemple de la figure 5 permet de réaliser des moyennes entre les signaux issus de colonnes immédiatement voisines. D'autres alternatives permettant de mélanger les signaux sont possibles comme par exemple l'addition des signaux.

De la même façon pour regrouper des pixels immédiatement voisins par quatre, les sorties des multiplexeurs A, B, C et D sont toutes connectées. A cet effet, L'interrupteur 40 permet de connecter les sorties des multiplexeurs B et C. l'interrupteur 40 n'est fermé qu'avec les interrupteurs 39 et 41. Lorsque les trois interrupteurs 39 à 41 sont fermés, les quatre capacités 43 à 46 sont connectées en parallèle, ce qui permet de moyenner les signaux présents sur les sorties des quatre multiplexeurs A à D. On retrouve ainsi en sortie du réseau d'interrupteurs 38, au premier instant, le regroupement des colonnes Col1, Col2, Col3 et Col4 et ainsi de suite jusqu'au quatrième instant où on retrouve ainsi en sortie du réseau d'interrupteurs 38, le regroupement des colonnes Col13, Col14, Col15 et Col16.

Il est bien sur possible de n'opérer aucun regroupement en ne fermant aucun interrupteur du réseau d'interrupteurs 38. Les sorties du réseau d'interrupteurs 38 peuvent être raccordées à un multiplexeur 50 formé par exemple d'un registre à décalage à entrées parallèles et sortie série afin de délivrer en série les informations collectées dans le détecteur pour former une image. En sortie du multiplexeur 50, les informations élémentaires délivrées en série peuvent donc être issus de chacun des pixels pris isolément ou d'un regroupement de pixels voisins en fonction de la commande du réseau d'interrupteurs 38.

Sur la figure 3, le nombre de conducteurs colonne Q est égal au nombre d'entrées de chaque convertisseur élevé au carré soit $K^2$. Ceci constitue la brique de base de l'invention. Pour mettre en œuvre un plus grand nombre de colonnes de pixels et donc un plus grand nombre de conducteurs de colonnes, cette brique peut être répliquée pour les colonnes au-delà de $K^2$. Plus précisément, le raccordement des $K^2$ premiers conducteurs de colonnes avec K multiplexeurs et avec le réseau d'interrupteurs 38 correspondant est répliqué par sous-ensembles de $K^2$ conducteurs de colonnes et de K multiplexeurs.

La figure 5 présente un exemple mettant en œuvre des multiplexeurs à quatre entrées permettant de réaliser des regroupements par deux ou par quatre. De façon plus générale, il est possible de mettre en œuvre d'autres multiplexeurs possédant un nombre différent d'entrées. Par exemple, avec douze multiplexeurs à douze entrées, il est possible de réaliser des regroupements par deux, trois, quatre, six et douze colonnes immédiatement voisines. De façon plus générale, en mettant en œuvre K multiplexeurs à K entrées, il est possible de réaliser des regroupements de colonnes par tous les sous multiples de K et aussi un regroupement par K colonnes.

Comme on l'a vu plus haut, Il est possible de réaliser un détecteur avec un nombre de colonnes Q supérieur à $K^2$. Dans ce cas, le détecteur dispose d'autant de réseaux d'interrupteurs que de groupes de K multiplexeurs dont les rangs n modulo K sont compris entre 1 et K.

## Revendications

1. Détecteur matriciel comprenant :

   • un ensemble de pixels (P) sensibles à un phénomène physique et organisé en matrice selon au moins une ligne et plusieurs colonnes, chaque pixel (P) générant un signal fonction du phénomène physique,
   • Q conducteurs de colonne (Col) reliant chacun le ou les pixels d'une même colonne et destinés à transporter les signaux générés par les pixels (P), les colonnes (Col) et les conducteurs associés étant ordonnés selon leur répartition physique, q représentant une colonne courante,
   • N multiplexeurs (A, B, C, D), chaque multiplexeur comprenant K entrées ordonnées de 1 à K, k représentant le rang de l'entrée courante, chaque entrée recevant des signaux d'un des conducteurs de colonne (Col), K étant supérieur ou égal à 2, Q étant au moins égal à $K^2$, les N multiplexeurs (A, B, C, D) étant ordonnés de 1 à Q/K, n représentant le rang du multiplexeur courant, chaque multiplexeur (A, B, C, D) comprenant une sortie (SA, SB, SC, SD), les N multiplexeurs (A, B, C, D) délivrant sur leur sortie, séquentiellement les signaux reçus dans l'ordre de leurs entrées, les N multiplexeurs (A, B, C, D) étant configurés pour délivrer

simultanément les signaux reçus d'entrées de même rang k, **caractérisé en ce qu'**il comprend :

> • un réseau d'interrupteurs (38) permettant de mélanger des signaux présents sur les sorties (SA, SB, SC, SD) des multiplexeurs (A, B, C, D), afin de regrouper les signaux issus de pixels immédiatement

voisins et appartenant à des colonnes distinctes, et **en ce que** :

> • la colonne de rang q, avec q compris entre 1 et $K^2$, est raccordée au multiplexeur de rang n = q modulo K,
> • la colonne de rang q avec q compris entre 1 et $K^2$ est raccordée à l'entrée de rang k égal à la partie entière par défaut de (q - 1)/K à laquelle on ajoute 1, notée : k = $_\lfloor$(q - 1)/K$_\rfloor$ + 1.

2. Détecteur selon la revendication 1, dans lequel Q est supérieur à $K^2$ et dans lequel le raccordement des $K^2$ premiers conducteurs de colonnes avec K multiplexeurs et avec le réseau d'interrupteurs (38) correspondant est répliqué par sous-ensembles de $K^2$ conducteurs de colonnes et de K multiplexeurs.

3. Détecteur selon l'une des revendications précédentes, **caractérisé en ce que** le réseau d'interrupteurs (38) est configuré pour opérer des regroupements par sous multiples de K ou par K.

4. Détecteur selon l'une des revendications précédentes, **caractérisé en ce qu'**il comprend en outre N circuits de conversion (32A, 32B, 32C, 32D), chacun associé à un des multiplexeurs (A, B, C, D), chaque multiplexeur (A, B, C, D) délivrant un signal multiplexé vers le circuit de conversion (32A, 32B, 32C, 32D) associé.

5. Détecteur selon la revendication 4, **caractérisé en ce que** le réseau d'interrupteurs (38) est disposé en aval des circuits de conversion (32A, 32B, 32C, 32D)

## Patentansprüche

1. Matrixdetektor, Folgendes umfassend:

> • eine Gruppe von Pixeln (P), welche einem physikalischen Phänomen gegenüber empfindlich und zu einer Matrix in mindestens einer Zeile und mehreren Spalten organisiert sind, wobei jeder Pixel (P) ein von dem physikalischen Phänomen abhängiges Signal erzeugt,
> • Q Spaltenleiter (Col), welche jeweils den oder die Pixel einer gleichen Spalte verbinden, und dazu bestimmt sind, Signale zu transportieren, welche durch die Pixel (P) erzeugt werden, wobei die Spalten (Col) und die zugeordneten Leiter gemäß ihrer physikalischen Verteilung geordnet sind, wobei q eine laufende Spalte darstellt,
> • N Multiplexer (A, B, C, D), wobei jeder Multiplexer K von 1 bis K geordnete Eingänge aufweist, wobei k den Rang des gegenwärtigen Eingangs darstellt, wobei jeder Eingang Signale von einem der Spaltenleiter (Col) empfängt, wobei K größer oder gleich 2 ist, wobei Q mindestens gleich $K^2$ ist, wobei die N Multiplexer (A, B, C, D) geordnet sind von 1 bis Q/K, wobei n den Rang des gegenwärtigen Multiplexers darstellt, wobei jeder Multiplexer (A, B, C, D) einen Ausgang (SA, SB, SC, SD) umfasst, wobei die N Multiplexer (A, B, C, D) an ihrem Ausgang sequenziell die in der Reihenfolge ihrer Eingänge empfangenen Signale abgeben, wobei die N Multiplexer (A, B, C, D) konfiguriert sind, um gleichzeitig Signale abzugeben, welche von Eingängen gleichen Ranges k empfangen werden,

**dadurch gekennzeichnet, dass** er Folgendes umfasst:

> • ein Netzwerk von Schaltern (38), welches eine Mischung der an den Ausgängen (SA, SB, SC, SD) der Multiplexer (A, B, C, D) anliegenden Signale ermöglicht, um die aus unmittelbar benachbarten Pixeln stammenden Signale, welche zu unterschiedlichen Spalten gehören, zu gruppieren,

und dadurch, dass:

• die Spalte des Ranges q, wobei q zwischen 1 und K$^2$ beträgt, mit dem Multiplexer des Ranges n = q Modulo K verbunden ist,
• die Spalte des Ranges q, wobei q zwischen 1 und K$^2$ beträgt, mit dem Eingang des Ranges k verbunden ist, welcher mit dem defaultmäßigen Ganzzahlteil von (q - 1)/K verbunden ist, zu welchem man 1 hinzufügt, folgendermaßen notiert:

$$k = \lfloor (q - 1)/K \rfloor + 1.$$

2. Detektor nach Anspruch 1, wobei Q größer ist als K$^2$ und wobei die Verbindung der K$^2$ ersten Spaltenleiter mit K Multiplexern und dem entsprechenden Schalternetzwerk (38) durch Teilgruppen von K$^2$ Spaltenleitern und K Multiplexern repliziert ist.

3. Detektor nach einem der vorhergehenden Ansprüche, **dadurch gekennzeichnet, dass** das Schalternetzwerk (38) konfiguriert ist, um Gruppierungen von Sub-Vielfachen von K oder von K zu bilden.

4. Detektor nach einem der vorhergehenden Ansprüche, **dadurch gekennzeichnet, dass** er ferner N Umwandlungsschaltungen (32A, 32B, 32C, 32D) umfasst, wobei jede einem der Multiplexer (A, B, C, D) zugeordnet ist, wobei jeder Multiplexer (A, B, C, D) ein multiplextes Signal an die zugeordnete Umwandlungsschaltung (32A, 32B, 32C, 32D) abgibt.

5. Detektor nach Anspruch 4, **dadurch gekennzeichnet, dass** das Schalternetzwerk (38) im nachgelagerten Bereich der Umwandlungsschaltungen (32A, 32B, 32C, 32D) angeordnet ist.

**Claims**

1. A matrix-array detector comprising:

   • a set of pixels (P) that are sensitive to a physical phenomenon and arranged into a matrix in at least one row and multiple columns, each pixel (P) generating a signal dependent on the physical phenomenon,
   • Q column conductors (Col), each connecting the one or more pixels of one and the same column and intended to transport the signals generated by the pixels (P), the columns (Col) and associated conductors being ordered according to their physical distribution, q representing a current column,
   • N multiplexers (A, B, C, D), each multiplexer comprising K inputs ordered from 1 to K, k representing the rank of the current input, each input receiving signals from one of the column conductors (Col), K being greater than or equal to 2, Q being at least equal to K$^2$, the N multiplexers (A, B, C, D) being ordered from 1 to Q/K, n representing the rank of the current multiplexer, each multiplexer (A, B, C, D) comprising an output (SA, SB, SC, SD), the N multiplexers (A, B, C, D) sequentially delivering at their output the signals received in the order of their inputs, the N multiplexers (A, B, C, D) being configured to simultaneously deliver the signals received from inputs of the same rank k,

   **characterised in that** it comprises:

   • a network of switches (38) allowing signals present at the outputs (SA, SB, SC, SD) of the multiplexers (A, B, C, D) to be mixed, so as to regroup the signals from immediately adjacent pixels belonging to distinct columns,

   and **in that**:

   • the column of rank q, where q is between 1 and K$^2$, is connected to the multiplexer of rank n = q modulo K,
   • the column of rank q, where q is between 1 and K$^2$, is connected to the input of rank k equal to the default integer portion of (q - 1)/K with 1 added, denoted by:

   $$k = \lfloor (q - 1)/K \rfloor + 1.$$

2. The detector according to claim 1, wherein Q is greater than K$^2$ and wherein the connection of the first K$^2$ column conductors to K multiplexers and to the corresponding network of switches (38) is replicated by subsets of K$^2$ column

conductors and K multiplexers.

3. The detector according to one of the preceding claims, **characterised in that** the network of switches (38) is configured to form groupings of submultiples of K or of K.

4. The detector according to one of the preceding claims, **characterised in that** it further comprises N converter circuits (32A, 32B, 32C, 32D), each associated with one of the multiplexers (A, B, C, D), each multiplexer (A, B, C, D) delivering a multiplexed signal to the associated converter circuit (32A, 32B, 32C, 32D).

5. The detector according to claim 4, **characterised in that** the network of switches (38) is arranged downstream of the converter circuits (32A, 32B, 32C, 32D).

FIG. 1

FIG. 2

FIG. 3

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007075255 A